# EUROPÄISCHE PATENTSCHRIFT

(11) **EP 2 195 155 B1**
(45) Veröffentlichungstag und Bekanntmachung des Hinweises auf die Patenterteilung: **03.12.2014**
(21) Anmeldenummer: 08837151.3
(22) Anmeldetag: 13.10.2008
(51) Int. Cl.: B29C 65/36, B29C 65/48

(54) **VERFAHREN ZUM VERBINDEN EINES ERSTEN MATERIALS MIT EINEM ZWEITEN MATERIAL IM FLUGZEUGBAU**
METHOD FOR CONNECTING A FIRST MATERIAL TO A SECOND MATERIAL IN AIRCRAFT CONSTRUCTION
PROCÉDÉ POUR ASSEMBLER UN PREMIER MATÉRIAU À UN DEUXIÈME MATÉRIAU EN CONSTRUCTION AÉRONAUTIQUE

(30) Priorität: 12.10.2007 DE 102007000862; 12.10.2007 US 979493 P
(43) Veröffentlichungstag der Anmeldung: 16.06.2010
(73) Patentinhaber: Airbus Operations GmbH, 21129 Hamburg (DE)
(72) Erfinder: METZECH, Sabine, 27751 Delmenhorst (DE); WACHINGER, Georg, 83026 Rosenheim (DE); MEER, Thomas, 85658 Egmating (DE); LAMMEL, Christian, 85737 Ismaning (DE)
(74) Vertreter: UEXKÜLL & STOLBERG
(86) Internationale Anmeldenummer: PCT/EP2008/008664
(87) Internationale Veröffentlichungsnummer: WO 2009/047010

(56) Entgegenhaltungen:
- US-A- 5 832 594
- US-B1- 6 284 089

## Beschreibung

Die Erfindung betrifft ein Verfahren zum Verbinden eines ersten Materials mit einem zweiten Material im Flugzeugbau.

Im Flugzeugbau wird häufig ein erstes Material, beispielsweise ein thermoplastisches Material, mit einem zweiten Material, beispielsweise einem Faserverbundmaterial, mittels einer mechanischen Befestigung, insbesondere mittels Schrauben, oder durch Kleben verbunden vgl. US 6284089, US 5832594. Beispielsweise werden häufig Kunststoffhalter, die thermoplastisches Material aufweisen, mit Bauteilen, wie beispielsweise eine Seitenverkleidung oder ein Hatrack-Kasten, die Faserverbundmaterial aufweisen, innerhalb eines druckbelüftbaren Bereichs, beispielsweise eines Kabinenbereichs eines Flugzeugs, verbunden.

Das Kleben von Kunststoffhaltern, die thermoplastisches Material aufweisen, an Bauteilen, die Faserverbundmaterial aufweisen, erfordert eine sehr aufwendige Vorbehandlung der Klebeflächen der Kunststoffhalter. Die Flächen müssen zuerst aufgeraut und danach mit einem Primer vorbehandelt werden. Erst nach dieser Vorbehandlung können die Kunststoffhalter mit den Bauteilen verklebt werden. Dann muss eine gewisse Zeitdauer gewartet werden, in der Regel fünf bis acht Stunden, bis der Klebstoff ausgehärtet ist und die notwendige Anfangshaftfestigkeit aufweist. Häufig werden auch Klebstoffe verwendet, die warmaushärtend sind. Bei einer Verwendung derartiger Klebstoffe müssen die miteinander zu verbindenden Kunststoffhalter und Bauteile bis zu 48 Stunden in einem Ofen ausgehärtet werden. Das Klebeverfahren ist also sehr aufwendig und zeitintensiv.

Alternativ oder zusätzlich werden Kunststoffhalter, die thermoplastisches Material aufweisen, häufig mittels Schrauben an Bauteilen, die Faserverbundmaterial aufweisen, befestigt. Dies hat allerdings den Nachteil, dass die Größe und Position der Bohrungen für die Schrauben bereits während der Herstellung der Kunststoffhalter und der Bauteile bekannt sein muss und dass bei einer Veränderung der Befestigungsposition in den Bauteilen und/oder in den Kunststoffhaltem neue Bohrungen eingebracht werden müssen. Dies ist für den gesamten Herstellungsprozess nachteilig.

Es ist die Aufgabe der vorliegenden Erfindung ein Verfahren zum Verbinden eines ersten Materials mit einem zweiten Material im Flugzeugbau bereitzustellen, das weniger aufwendig und zeitintensiv ist als bekannte Klebeverfahren und das im Vergleich zu einem mechanischen Befestigen, wie beispielsweise mittels Schrauben, eine Veränderung der Verbindungsposition des ersten Materials relativ zu dem zweiten Material vereinfacht.

Diese Aufgabe wird durch ein Verfahren gemäß Anspruch 1 gelöst.

Der Ausdruck "Aktivierung des Klebematerials" umfasst eine Aktivierung des Klebematerials derart, dass die Zeitdauer, die erforderlich ist, um das erste Material und das zweite Material miteinander zu verbinden, verkürzt wird. Beispielsweise wird durch die Aktivierung des Klebematerials diese Zeitdauer von mehreren Stunden auf wenige Minuten oder wenige Sekunden reduziert. Des Weiteren umfasst der Ausdruck "Aktivierung des Klebematerials", dass vor der Aktivierung des Klebematerials das Klebematerial bevorzugt keine oder nur schwache Klebeeigenschaften aufweist, die nicht ausreichend sind, das erste Material und das zweite Material miteinander zu verbinden. Der Ausdruck "Aktivierung des Klebematerials" umfasst also bevorzugt Aktivierungen, die dazu führen, dass das erste Material und das zweite Material schneller miteinander verbunden werden und/oder erst durch die Aktivierung Klebeeigenschaften erzeugt werden, die ausreichend sind, das erste Material und das zweite Material miteinander zu verbinden. Das Klebematerial ist dabei bevorzugt ein Klebematerial das nicht lösemittelbasiert ist.

Da die Erzeugung der Induktionswärme und die durch die Induktionswärme verursachte Aktivierung des Klebematerials sehr schnell erfolgen, wird durch das erfindungsgemäße Verfahren die Zeit, die zum Verbinden der Materialien benötigt wird, im Vergleich zu anderen im Flugzeugbau bekannten Verfahren sehr stark reduziert. Sie beträgt insbesondere nur wenige Minuten. Es sind auch keine Bohrungen in den Materialien erforderlich, wodurch eine Veränderung der Verbindungsposition des einen Materials relativ zu dem anderen Material vereinfacht wird.

Es ist bevorzugt, dass das erste Material und/oder das zweite Material zumindest ein Material aus einer Gruppe bestehend aus Kunststoffen, insbesondere thermoplastischen Materialien, Faserverbundkunststoffen, insbesondere kohlenstofffaserverstärkten Kunststoffen und glasfaserverstärkten Kunststoffen, Metallen und Faser-Metall-Laminaten (FML), beispielsweise GLARE, aufweisen. Die Metalle sind bevorzugt Al, Mg, Ti, Stahl und Edelstahl. Das erste Material und das zweite Material können jeweils ein Material oder mehrere Materialien der oben genannten Gruppe aufweisen. Dabei können das erste Material und das zweite Material die gleichen Materialien, aber auch unterschiedliche Materialien aufweisen. Auch kann nur das erste Material oder das zweite Material ein oder mehrere Materialien der oben genannten Gruppe aufweisen. Der Ausdruck aufweise" umfasst auch den Ausdruck bestehe aus", das heißt, das erste Material und/oder das zweite Material können zumindest ein Material aus der oben genannten Gruppe ausschließlich oder neben weiteren Materialien aufweisen.

Zusätzlich können andere metallische Stoffe, insbesondere metallische Nanopartikel, bevorzugt Nanoferrite, als induktionswärmeerzeugende Mittel verwendet werden.

Wenn das erste Material und/oder das zweite Material das induktionswärmeerzeugende Mittel aufweisen, ist ein erfindungsgemäßes Verbinden möglich, ohne dass ein induktionswärmeerzeugendes Mittel in das Klebematerial eingebracht werden muss, wodurch die für das erfindungsgemäße Verbinden benötigte Zeit weiter reduziert wird.

Zusätzlich kann in einer weiteren bevorzugten Ausführungsform das induktionswärmeerzeugende Mittel eine Metallbeschichtung, die innerhalb oder außen auf dem ersten Material und/oder dem zweiten Material angeordnet ist, als induktionswärmeerzeugendes Mittel verwendet werden.

Es ist des Weiteren bevorzugt, dass die Induktionswärme durch mittelfrequente Strahlung in einem Frequenzbereich von 10 bis 50 kHz erzeugt wird.

Vorrichtungen zur Erzeugung mittelfrequenter Strahlung können kleiner und handlicher hergestellt werden als Vorrichtungen zur Erzeugung hochfrequenter Strahlung. Die bevorzugte Verwendung mittelfrequenter Strahlung ermöglicht daher die Durchführung des erfindungsgemäßen Verfahrens mit kleinen und handlichen Geräten, so dass der Aufwand für die Durchführung des erfindungsgemäßen Verfahrens weiter reduziert wird.

Es ist zudem bevorzugt, dass
a) das erste Material Bestandteil eines Befestigungselements ist oder das Befestigungselement aus dem ersten Material besteht und
b) das zweite Material Bestandteil eines Flugzeugbauteils ist oder das Flugzeugbauteil aus dem zweiten Material besteht,
so dass das erste Material des Befestigungselements mit dem zweiten Material des Flugzeugbauteils verbunden wird, um das Befestigungselement mit dem Flugzeugbauteil zu verbinden. Das Befestigungselement ist insbesondere ein Halter, wobei der Halter insbesondere ein thermoplastisches Material aufweist oder aus diesem hergestellt ist, insbesondere aus thermoplastischem Kunststoff. Das Flugzeugbauteil umfasst oder besteht aus bevorzugt Kunststoff, insbesondere Faserverbundkunststoffen, und/oder Metallen. Das erste Material und/oder das zweite Material können also auch Hybridmaterialien sein, die sowohl Kunststoffmaterialien als auch Metalle aufweisen.

Dadurch wird es ermöglicht, eine Verbindung zwischen einem Befestigungselement, insbesondere einem Halter, und einem Flugzeugbauteil schnell, zuverlässig und auf einfache Art und Weise zu erzeugen.

Das Flugzeugbauteil ist insbesondere eine Seitenverkleidung in einem Flugzeug, vorzugsweise in einem druckbelüftbaren Raum des Flugzeugs, und/oder ein Hatrack-Kasten des Flugzeugs oder ein Teil der Seitenverkleidung und/oder ein Teil des Hatrack-Kastens.

Das erfindungsgemäße Verfahren wird bevorzugt innerhalb eines Flugzeugs, insbesondere innerhalb eines im Betrieb druckbelüftbaren Raums eines Flugzeugs durchgeführt. Eine Befestigungselementanordnung bestehend aus einem Befestigungselement, insbesondere einem Halter, und einem Flugzeugbauteil ist also bevorzugt innerhalb eines Flugzeugs, vorzugsweise innerhalb eines im Betrieb druckbelüftbaren Raums des Flugzeugs, angeordnet. Alternativ kann das Verfahren aber auch in anderen Flugzeugbereichen durchgeführt werden, beispielsweise im Bereich der Rumpfinnenseite und/oder eines Flügels.

Die Erfindung bezieht sich des Weiteren auf ein Verfahren zum Verbinden eines ersten Materials mit einem zweiten Material mittels eines durch Wärme aktivierbaren Klebematerials im Flugzeugbau, wobei das Klebematerial zwischen dem ersten Material und dem zweiten Material angeordnet und eine Induktionswärme erzeugt wird, die zur Aktivierung des Klebematerials ausreichend ist, wobei das erste Material und/oder das zweite Material und/oder das Klebematerial ein induktionswärmeerzeugendes Mittel aufweisen, wobei das induktionswärmeerzeugende Mittel eine Menge von Kohlenstofffasern ist oder aufweist.

Das induktionswärmeerzeugende Mittel ist insbesondere ein kohlenstofffaserverstärkter Kunststoff, insbesondere in einem Lagenaufbau, weiter bevorzugt insbesondere ein Kohlenstofffaserlaminat (CFK).

Insbesondere, wenn als das erste und/oder zweite Material ein kohlenstofffaserverstärkter Kunststoff verwendet wird oder das erste Material und/oder das zweite Material einen derartigen kohlenstofffaserverstärkten Kunststoff aufweisen, kann die Induktionswärme in diesem Material erzeugt werden. Es ist also nicht erforderlich, weitere induktionswärmeerzeugende Mittel in das Klebematerial oder in das erste oder zweite Material einzubringen, wodurch das erfindungsgemäße Verfahren weiter vereinfacht wird.

Es ist bevorzugt, dass das erste Material und/oder das zweite Material ein kohlenstofffaserverstärkter Kunststoff in einem Lagenaufbau ist oder einen kohlenstofffaserverstärkten Kunststoff in einem Lagenaufbau aufweist, wobei der Lagenaufbau mehrere Lagen mit den Kohlenstofffasern aufweist und die Kohlenstofffasern des kohlenstofffaserverstärkten Kunststoffs das induktionswärmeerzeugende Mittel sind.

Es ist auch bevorzugt, dass die Kohlenstofffasern in zumindest einigen Lagen unidirektional ausgerichtet sind, wobei die Kohlenstofffasern von mindestens zwei benachbarten Lagen nicht parallel angeordnet sind, so dass die Kohlenstofffasern der mindestens zwei benachbarten Lagen Kreuzungspunkte aufweisen.

In einer Ausführungsform sind in jeder Lage die Kohlenstofffasern unidirektional ausgerichtet.

In einer weiteren Ausführungsform können die Kohlenstofffasern in zumindest einigen Lagen nicht unidirektional ausgerichtet sein, wobei die Kohlenstofffasern von mindestens zwei benachbarten Lagen nicht parallel angeordnet sind, so dass die Kohlenstofffasern in zumindest zwei benachbarten Lagen Kreuzungspunkte aufweisen.

In einer Ausführungsform sind in jeder Lage die Kohlenstofffasern nicht unidirektional ausgerichtet.

Lagenaufbauten mit den oben genannten Kreuzungspunkten erleichtern die Erzeugung einer zur Aktivierung des Klebematerials ausreichenden Induktionswärme.

In einer weiteren bevorzugten Ausführungsform bilden die Kohlenstofffasern in zumindest einer Lage ein Gewebe. In einer Ausführungsform bilden die Kohlenstoffe in jeder Lage ein Gewebe.

Es ist des Weiteren bevorzugt, dass die Lagen mittels Kohlenstofffasern, das heißt mit weiteren Kohlenstofffasern, vernäht sind. Zudem ist es bevorzugt, dass die Lagen in einer Richtung senkrecht zu den Ebenen, in denen die Lagen angeordnet sind, mittels Kohlenstofffasern vernäht sind. Auch die zum Vernähen benutzten Kohlenstofffasern können als induktionswärmeerzeugendes Mittel verwendet werden und das Erzeugen einer zur Aktivierung des Klebematerials ausreichenden Induktionswärme weiter erleichtern.

Es ist des Weiteren bevorzugt, dass die Ausrichtung der Kohlenstofffasern in den Lagen bezüglich einer Symmetrieebene, die parallel zu den Lagen und bezogen auf eine Richtung senkrecht zu den Lagen mittig im Lagenaufbau angeordnet ist, symmetrisch ist. Hierdurch können möglichweise im Lagenaufbau vorhandene Spannungen reduziert oder eliminiert werden.

Zudem ist es bevorzugt, dass neben den Kohlenstofffasern des kohlenstofffaserverstärkten Kunststoffs, die auch möglicherweise zum Nähen verwendete Kohlenstofffern umfassen können, kein weiteres induktionswärmeerzeugendes Mittel zur Erzeugung der Induktionswärme verwendet wird. Da bevorzugt kein weiteres induktionswärmeerzeugendes Mittel zur Erzeugung der Induktionswärme benötigt wird, wird das Klebeverfahren vereinfacht.

Es ist des Weiteren bevorzugt, dass das erste Material und/oder das zweite Material zumindest ein Material aus einer Gruppe bestehend aus Kunststoffen, insbesondere thermoplastischen Materialien, Faserverbundkunststoffen, insbesondere kohlenstofffaserverstärkten Kunststoffen und glasfaserverstärkten Kunststoffen, Metallen und Faser-Metall-Laminaten aufweisen.

Die Induktionswärme wird durch mittelfrequente Strahlung erzeugt.

Die Erfindung bezieht sich auf ein Verfahren gemäß Anspruch 1.

Einige Ausführungsformen werden im Folgenden anhand einer Zeichnung näher erläutert, in der
- Fig. 1: eine schematische Ansicht einer Ausführungsform einer Vorrichtung zum Verbinden eines ersten Materials mit einem zweiten Material zeigt, wobei ein induktionswärmeerzeugendes Mittel in einem Verbindungsbereich zwischen dem ersten Material und dem zweiten Material angeordnet ist,
- Fig. 2: eine schematische Ansicht einer Ausführungsform einer Vorrichtung zum Verbinden eines ersten Materials mit einem zweiten Material zeigt, wobei das induktionswärmeerzeugende Mittel in dem ersten Material angeordnet ist,
- Fig. 3: eine schematische Ansicht einer Ausführungsform einer Vorrichtung zum Verbinden eines ersten Materials mit einem zweiten Material zeigt, wobei ein induktionswärmeerzeugendes Mittel in dem zweiten Material angeordnet ist,
- Fig. 4: ein Flussdiagramm einer Ausführungsform eines erfindungsgemäßen Verfahrens zum Verbinden eines ersten Materials mit einem zweiten Material zeigt,
- Fig. 5: eine schematische Ansicht eines Flugzeugs mit einem Kabinenraum zeigt, in der eine Befestigungselementanordnung mit einem Flugzeugbauteil und einem Befestigungselement angeordnet ist,
- Fig. 6: schematisch einen Verbindungsbereich zeigt,
- Fig.7: eine schematische Darstellung eines induktionswärmeerzeugenden nichtgewebten metallischen Netzes zeigt,
- Fig. 8: eine schematische Querschnittsansicht eines Halters zeigt und
- Figuren 9 bis 11: schematische Darstellungen verschiedener Lagenaufbauten eines kohlenstofffaserverstärkten Kunststoffs zeigen.

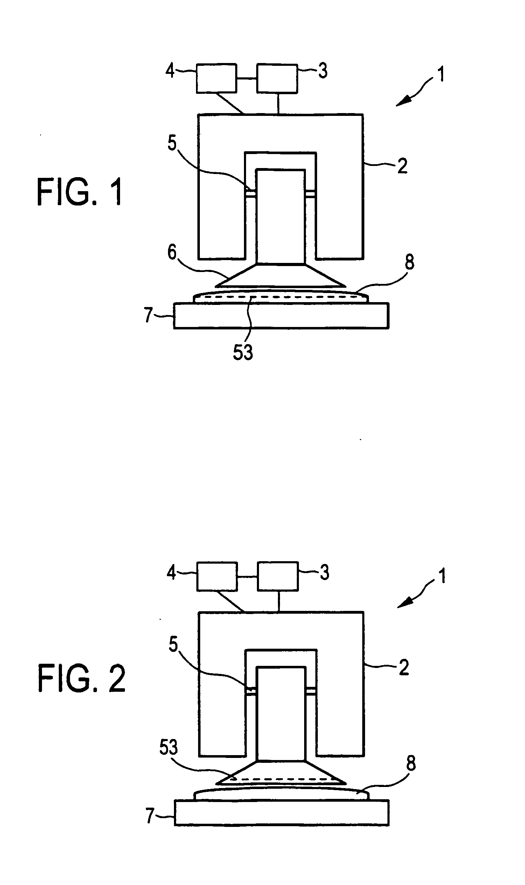

Fig. 1 zeigt eine schematische Ansicht einer Vorrichtung zum Verbinden eines ersten Materials mit einem zweiten Material.

Die Vorrichtung 1 zum Verbinden eines ersten Materials mit einem zweiten Material weist einen Induktor 2 zum Erzeugen elektromagnetischer Strahlung auf. In dieser Ausführungsform ist der Induktor 2 so ausgebildet, dass er eine mittelfrequente Strahlung erzeugt. In anderen Ausführungsformen kann der Induktor auch so ausgebildet sein, dass er elektromagnetische Strahlung in anderen Frequenzbereichen, beispielsweise im Hochfrequenzbereich, erzeugt.

Die Vorrichtung 1 zum Verbinden eines ersten Materials mit einem zweiten Material umfasst des Weiteren eine Steuerungseinheit 3, die mit dem Induktor 2 verbunden ist, um den Induktor 2 zu steuern. Mittels der Steuerungseinheit 3 können insbesondere die Frequenz und die Amplitude der erzeugten elektromagnetischen Strahlung gesteuert werden. Zudem kann mittels der Steuerungseinheit 3 bevorzugt die Zeitdauer der Erzeugung der elektromagnetischen Strahlung gesteuert werden.

Der Induktor 2 weist ein oder mehrere Befestigungselemente 5 auf, die derart angepasst sind, dass sie ein erstes Material, das in diesem Ausführungsbeispiel ein Material eines Halters 6 ist, halten können. Das Befestigungselement 5 kann auf unterschiedliche Art ausgebildet sein. Beispielsweise kann das Befestigungselement 5 eine kraftschlüssige Verbindung bilden, insbesondere durch Verkeilen, Verklemmen oder Verschrauben. Das Befestigungselement 5 kann aber auch eine form- oder stoffschlüssige Verbindung mit dem ersten Material bilden. Das Befestigungselement 5 ist an die Form und die Art des jeweiligen ersten Materials angepasst. In anderen Ausführungsformen kann der Induktor auch kein Befestigungselement zum Halten des ersten Materials aufweisen, wobei dann während eines Klebevorgangs der Induktor bevorzugt in Richtung des Klebebereichs gedrückt wird, um das erste Material und das zweite Material zusammenzuführen und während des Klebevorgangs zusammenzuhalten.

Die Vorrichtung 1 zum Verbinden eines ersten Materials mit einem zweiten Material weist des Weiteren eine Kühlungseinheit 4 zum Kühlen des Verbindungsbereichs und insbesondere des Induktors 2 auf. Die Kühlungseinheit 4 verwendet bevorzugt Pressluft und/oder Wasser, das in den Verbindungsbereich und insbesondere in den Induktor 2 geführt wird, um diese zu kühlen. In der Ausführungsform ist auch die Kühlungseinheit 4 mit der Steuerungseinheit 3 verbunden, so dass auch ein Kühlen des Verbindungsbereichs und insbesondere des Induktors 2 mittels der Steuerungseinheit 3 gesteuert werden kann.

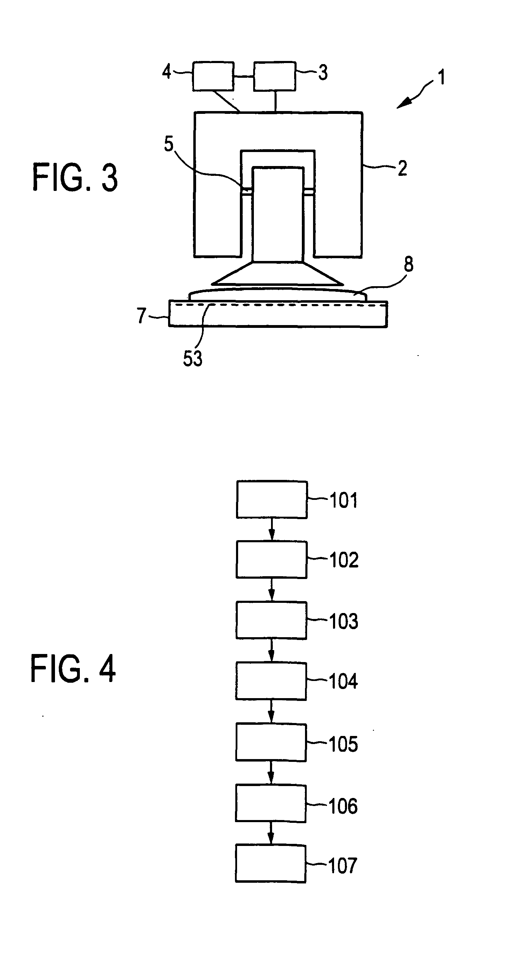

Das zweite Material ist in dem in Fig. 2 gezeigten Beispiel ein Faserverbundkunststoff 7, der mittels eines durch Wärme aktivierbaren Klebematerials 8 mit dem Halter 6 zu verbinden ist. Der Faserverbundkunststoff 7 ist beispielsweise ein Faserverbundkunststoff 7 eines Flugzeugbauteils. Die Wärme zur Aktivierung des Klebematerials 8 wird mittels eines nichtgewebten metallischen Netzes 53 erzeugt, indem durch den Induktor 2 Ströme und damit Wärme in dem nichtgewebten metallischen Netz 53 erzeugt werden. Das nichtgewebte metallische Netz 53 ist in oder in der Nähe des Verbindungsbereichs so angeordnet, dass in dem Verbindungsbereich eine Induktionswärme erzeugt wird, die ausreichend ist, um das durch Wärme aktivierbare Klebematerial 8 zu aktivieren. Dabei kann das nichtgewebte metallische Netz in dem Verbindungsbereich, wie in Fig. 1 dargestellt, und/oder in einem dem Verbindungsbereich zugewandten Teil des ersten Materials, insbesondere des Halters 6, wie es in Fig. 2 gezeigt ist, oder/und in einem dem Verbindungsbereich zugewandten Bereich des zweiten Materials 7, wie es in Fig. 3 dargestellt ist, angeordnet sein.

Das durch Wärme aktivierbare Klebematerial 8 kann beispielsweise ein reaktiver Klebstoff sein, der Epoxid und/oder Polyurethan und/oder Acrylat und/oder Imide und/oder Silikon aufweist. Das durch Wärme aktivierbare Klebematerial 8 kann auch Hotmelts, insbesondere reaktive Hotmelts, aufweisen bzw. aus diesen bestehen. Bevorzugte Hotmelts sind alle thermoplastischen Hotmelts, insbesondere Polyolefine, Polyester, Polyamide, Polyetherimide, Polyethersulfone und Polyetherketone. Das durch Wärme aktivierbare Klebematerial 8 weist auf bzw. besteht aus bevorzugt mindestens einem dieser Materialien.

Die Steuerungseinheit 3 und der Induktor 2 sind bevorzugt so angepasst, dass in dem Verbindungsbereich eine Wärme erzeugt werden kann, die ausreichend ist, um das durch Wärme aktivierbare Klebematerial zu aktivieren. Beispielsweise wird bei 2-K-Pastenklebstoffen auf Epoxidharzbasis im Verbindungsbereich eine Temperatur von 50 bis 200°C erzeugt. Wenn als Klebematerial 2-K-Pastenklebstoffe auf PU-Basis verwendet werden, wird im Verbindungsbereich eine Temperatur von beispielsweise 40 bis 200°C erzeugt. Bei einer Verwendung von 1-K-Epoxidharzklebstoffen wird zudem beispielsweise eine Temperatur von 100 bis 250°C in dem Verbindungsbereich erzeugt.

Zur Kontrolle der Temperatur in dem Verbindungsbereich kann ein in der Vorrichtung 1 und insbesondere im Induktor 2 eingebautes Thermoelement oder ein externe Pyrometer verwendet werden.

In einer anderen Ausführungsform kann die Vorrichtung angepasst sein, Wärme zur Aktivierung des Klebematerials mittels Kohlenstofffasern zu erzeugen, indem durch den Induktor Ströme und damit Wärme in den Kohlenstofffasern erzeugt werden.

Im Folgenden wird ein Verfahren zum Verbinden eines ersten Materials mit einem zweiten Material im Flugzeugbau unter Bezugnahme auf das in Fig. 4 dargestellte Flussdiagramm erläutert.

In Schritt 101 wird der Halter 6 in den Induktor 2 eingeführt und mittels der Befestigungselemente 5 an dem Induktor 2 befestigt. Dann wird im Schritt 102 eine Fläche des zweiten Materials 7, die mit dem ersten Material zu verbinden ist, und/oder eine Fläche des ersten Materials 6, die mit dem zweiten Material zu verbinden ist, mit dem durch Wärme aktivierbaren Klebematerial 8 versehen. In anderen Ausführungsformen könnten das erste Material und/oder das zweite Material bereits mit dem Klebematerial 8 versehen sein, so dass der Schritt 102 in diesem Fall entfallen könnte. Wenn das erste Material und/oder das zweite Material bereits mit einem Klebematerial versehen worden sind, so ist dieses Klebematerial bevorzugt ein Material, das erst bei Erwärmung reaktiv bzw. Klebeeigenschaften aufweist, insbesondere ein Hotmeltklebematerial, und insbesondere bei Raumtemperatur keine Klebeeigenschaften aufweist.

In Schritt 103 wird ein nichtgewebtes metallisches Netz 53 auf eine Seite des ersten Materials oder des zweiten Materials gelegt, die mit dem Klebematerial 8 versehen ist. Wenn in anderen Ausführungsformen das nichtgewebte metallische Netz in dem ersten Material, beispielsweise wie in Fig. 2 gezeigt, und/oder in dem zweiten Material, wie beispielsweise in Fig. 3 gezeigt, angeordnet ist, kann Schritt 103 entfallen. Auch wenn das Klebematerial selbst bereits Induktionswärme erzeugende Elemente aufweist, wie beispielsweise metallische Partikel, kann Schritt 103 entfallen. Anstelle des nichtgewebten metallischen Netzes können in anderen Ausführungsformen auch andere Induktionswärme erzeugende Mittel verwendet werden, wie beispielsweise metallische Nanopartikel oder Nanoferrite. Des Weiteren kann der Schritt 103 entfallen, wenn als induktionswärmeerzeugendes Mittel Kohlenstofffasern des ersten und/oder zweiten Materials verwendet werden. Alternativ können diese Kohlenstofffasern als induktionswärmeerzeugendes Mittel auch zusammen mit dem nichtgewebten metallischen Netz 53 verwendet werden.

In Schritt 104 wird der Induktor 2 mit dem ersten Material, in diesem Ausführungsbeispiel mit dem Halter 6, auf das zweite Material 7 gesetzt. Dabei kann der Induktor 2 mit dem Halter 6 auf dem zweiten Material 7 manuell gehalten werden. In anderen Ausführungsformen kann der Induktor 2 auch Halteelemente aufweisen, die den Induktor 2 mit dem Halter 6 während des Verbindungsvorgangs auf dem zweiten Material 7 halten. Diese Halteelemente können beispielsweise selbsthaftende Elemente, wie beispielsweise Saugnäpfe, sein.

Dann wird in Schritt 105 mittels der Steuerungseinheit 3 elektromagnetische Strahlung durch den Induktor 2 derart erzeugt, dass eine Induktionswärme entsteht, die in dem Verbindungsbereich eine Wärme erzeugt, die ausreichend ist, um das Klebematerial 8 derart zu aktivieren, dass Klebeeigenschaften erzeugt werden, die ausreichend sind, um das erste Material und das zweite Material miteinander zu verbinden. Bevorzugt wird die Erwärmung über ein Thermoelement, das in dem Induktor integriert sein kann, und/oder ein externes Pyrometer kontrolliert. Die Parameter für die Erzeugung der elektromagnetischen Strahlung durch den Induktor 2 können beispielsweise vor und/oder während der Erzeugung der Wärme eingestellt und/oder verändert werden. Die Parameter, beispielsweise die Frequenz und Amplitude der elektromagnetischen Strahlung und die Dauer der Wärmeerzeugung, können an der Steuerungseinheit 3 zu einem beliebigen Zeitpunkt vor dem Beginn der Erzeugung der elektromagnetischen Strahlung eingestellt werden, so dass zum Starten der Erzeugung der elektromagnetischen Strahlung dieser Vorgang nur noch aktiviert werden muss.

Nachdem das Klebematerial 8, wie oben beschrieben, aktiviert worden ist, wird in Schritt 106 die Erzeugung elektromagnetischer Strahlung durch den Induktor 2 mittels der Steuerungseinheit 3 angehalten und der Verbindungsbereich wird mittels der Kühlungseinheit 4 gekühlt. Bevorzugt kühlt die Kühlungseinheit 4 auch den Induktor 2.

Nach der Kühlphase wird in Schritt 107 das Befestigungselement 5 von dem Halter 6 gelöst und der Induktor 2 wird entfernt, wobei das erste Material und das zweite Material miteinander verbunden sind.

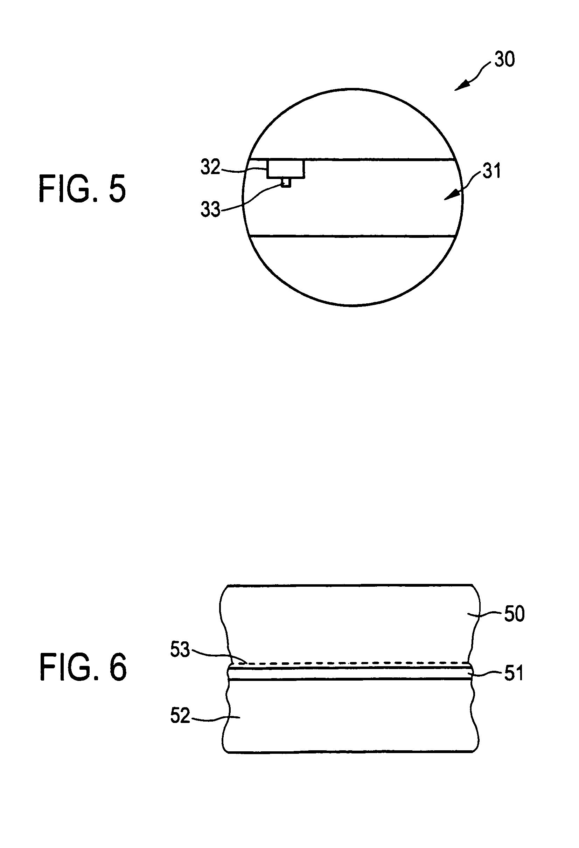

Fig. 5 ist eine schematische Ansicht einer Ausführungsform einer erfindungsgemäßen Vorrichtung 30 umfassend ein erstes Material und ein zweites Material.

Die Vorrichtung 30 ist ein Flugzeug, wobei in Fig. 5 schematisch eine Querschnittsansicht durch einen Flugzeugrumpf dargestellt ist. Das Flugzeug 30 weist einen im Betrieb druckbelüftbaren Kabinenbereich 31 auf, in dem ein Flugzeugbauteil 32, das ein Faserverbundmaterial, insbesondere ein Faserverbundkunststoff-Material (FVK-Material), aufweist, angeordnet ist. Das Flugzeugbauteil 32 ist mit einem Halter 33, der thermoplastisches Material aufweist oder aus thermoplastischem Material besteht, verbunden. Die Verbindung zwischen dem Flugzeugbauteil 32 und dem Halter 33 bildet eine Befestigungsanordnung und ist durch das oben beschriebene Verfahren herstellbar.

In dieser Ausführungsform weist das Flugzeugbauteil 32 ein nichtgewebtes metallisches Netz, insbesondere ein nichtgewebtes metallisches Netz der Firma Astrostrike oder Dexmet, auf. Dieses nichtgewebte metallische Netz wurde während des Befestigens des Halters 33 an dem Flugzeugbauteil 32 zur Erzeugung der Induktionswärme verwendet, die zur Aktivierung des zwischen dem Halter 33 und dem Flugzeugbauteil 32 befindlichen Klebematerials ausreichend ist.

In einer anderen Ausführungsform weist das Flugzeugbauteil 32 kein nichtgewebtes metallisches Netz auf, insbesondere wenn die Kohlenstofffasern zur Erzeugung der Induktionswärme verwendet werden.

In einer Ausführungsform kann die Vorrichtung zum Verbinden eines ersten Materials mit einem zweiten Material Kohlenstofffasern des ersten Materials und/oder des zweiten Materials als induktionswärmeerzeugendes Mittel verwenden, wobei in diesem Fall das nichtgewebte metallische Netz 53 nicht zwingend sondern nur fakultativ verwendet wird, insbesondere um die Induktionswärme weiter zu erhöhen.

Der Verbindungsbereich ist schematisch und vergrößert in Fig. 6 dargestellt. Fig. 6 zeigt einen dem Verbindungsbereich zugewandten Abschnitt 50 des Flugzeugbauteils 32, einen dem Verbindungsbereich zugewandten Abschnitt 52 des Halters 33 und eine Verbindungsschicht 51, die durch das Klebematerial gebildet wird. In einem Bereich in der Nähe der Verbindungsschicht 51 ist in dem Abschnitt 50 des Flugzeugbauteils 32 ein nichtgewebtes metallisches Netz 53 zur Erzeugung der Induktionswärme angeordnet. In anderen Ausführungsformen kann das induktionswärmeerzeugende Mittel, das heißt beispielsweise das nichtgewebte metallische Netz, auch in der Verbindungsschicht 51 oder in dem Abschnitt 52 des Halters 33 angeordnet sein. Wenn das Flugzeugbauteil 32 und/oder der Halter 33 induktionswärmeerzeugende Mittel bereits aufweist, beispielsweise Metalle, ist ein zusätzliches induktionswärmeerzeugendes Mittel in dem Flugzeugbauteil 32, der Verbindungsschicht 51 oder dem Halter 33 nicht notwendig.

Wenn als induktionswärmeerzeugende Mittel Kohlenstofffasern des ersten Materials und/oder des zweiten Materials, insbesondere des Faserverbundmaterials des Flugzeugbauteils und/oder des Halters, verwendet werden, weist der Verbindungsbereich bevorzugt kein nichtgewebtes metallisches Netz auf. Bei einer entsprechenden Darstellung würde in der Fig. 6 also die gestrichelte Linie 53 in diesem Fall fehlen.

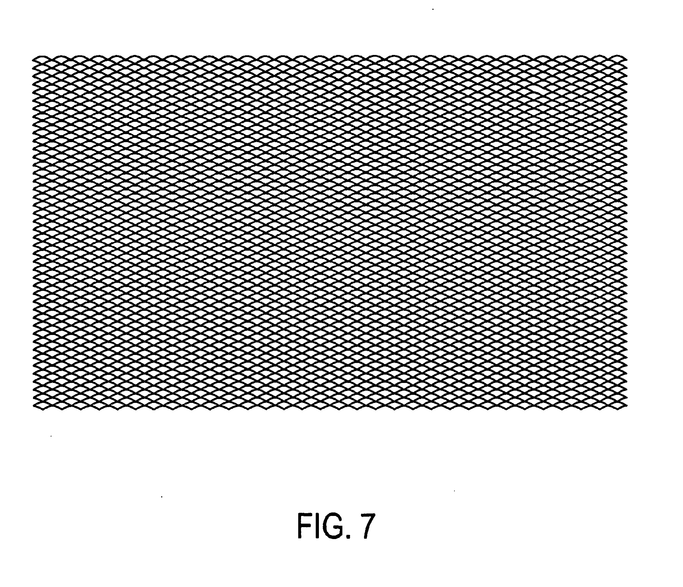

Fig. 7 zeigt eine schematische Ansicht eines nichtgewebten metallischen Netzes, das durch Strecken und Schlitzen eines Metallblatts hergestellt worden ist.

Dieses nichtgewebte metallische Netz weist im Gegensatz zu einem gewebten metallischen Netz keine Berührungsstellen einzelner Fäden auf, die einen durch Induktionsströme zu überwindenden Widerstand erzeugen könnten. Durch das nichtgewebte metallische Netz lässt sich also leicht eine Induktionswärme erzeugen, die zur Aktivierung des Klebematerials ausreichend ist.

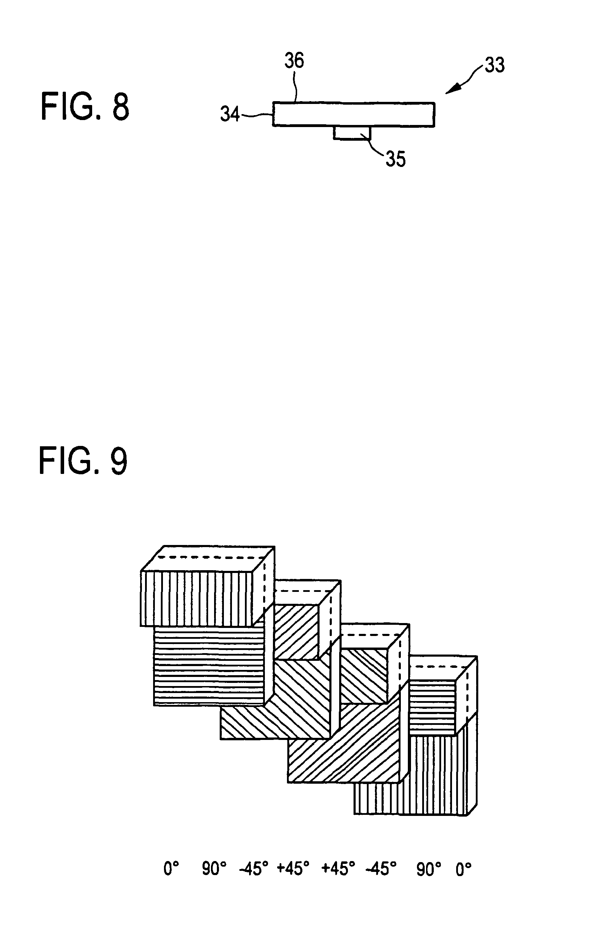

Fig. 8 ist eine schematische Ansicht des Halters 33. Der Halter 33 umfasst in diesem Ausführungsbeispiel einen scheibenförmigen Befestigungsabschnitt 34, der mit dem Flugzeugbauteil verbunden ist, und ein Halteelement 35. Der Befestigungsabschnitt 34 und das Halteelement 35 weisen einen Polyamid-PA66-Anteil von 70 Prozent und einen Glasfaseranteil von 30 Prozent auf. Das Halteelement 35 dient zum Haltens eines Objekts, wie beispielsweise einer elektrischen Leitung oder schwererer Gegenstände. Die Dicke des Befestigungsabschnitts beträgt in diesem Beispiel 2,2 mm und der Durchmesser des Befestigungsabschnitts 24 mm. In anderen Ausführungsformen kann der Halter auch, wie schematisch in den Figuren 1 bis 3 gezeigt, ausgebildet sein. Der Halter kann also auch einen ersten länglichen rechtwinkligen oder zylindrischen Abschnitt aufweisen, der während des Verbindungsvorgangs bevorzugt mit dem Induktor 2 verbunden wird, und einen konus- oder tellerförmigen zweiten Abschnitt, der mit einem zweiten Material, insbesondere mit einem Material eines Flugzeugbauteils, verbunden wird. Das erste Material und das zweite Material können auch andere beliebige Formen aufweisen.

Das Flugzeugbauteil ist in diesem Ausführungsbeispiel ein Hatrack-Kasten oder ein Teil eines Hatrack-Kastens. In anderen Ausführungsformen kann das Flugzeugbauteil auch jedes andere beliebige Flugzeugbauteil sein, insbesondere eine Seitenverkleidung in einem Flugzeug.

Bevorzugt werden Lagenaufbauten eines kohlenstofffaserverstärkten Kunststoffs als erstes Material und/oder als zweites Material verwendet, wobei in diesen Lagenaufbauten Induktionswärme erzeugbar ist.

Bevorzugte Lagenaufbauten eines kohlenstofffaserverstärkten Kunststoffs sind beispielsweise Lagenaufbauten, in denen in der jeweiligen Lage die Kohlenstofffasern unidirektional ausgerichtet sind und Kohlenstofffasern von wenigstens zwei benachbarten Lagen nicht parallel zueinander angeordnet sind, so dass Kohlenstofffasern benachbarter Lagen Kreuzungspunkte bilden. In Lagenaufbauten mit derartigen Kreuzungspunkten lässt sich eine zur Aktivierung des Klebematerials ausreichende Induktionswärme erzeugen. Ein derartiger Lagenaufbau, der ein Multiaxialgelege darstellt, ist in Figur 9 beispielhaft dargestellt. In Figur 9 ist zudem zu erkennen, dass der Lagenaufbau bevorzugt bezüglich einer mittigen Symmetrieebene und bezüglich der Orientierungen der Kohlenstofffasern in den einzelnen Lagen symmetrisch aufgebaut ist. Dies hat den Vorteil, dass Spannungen innerhalb des Lagenaufbaus reduziert oder eliminiert werden.

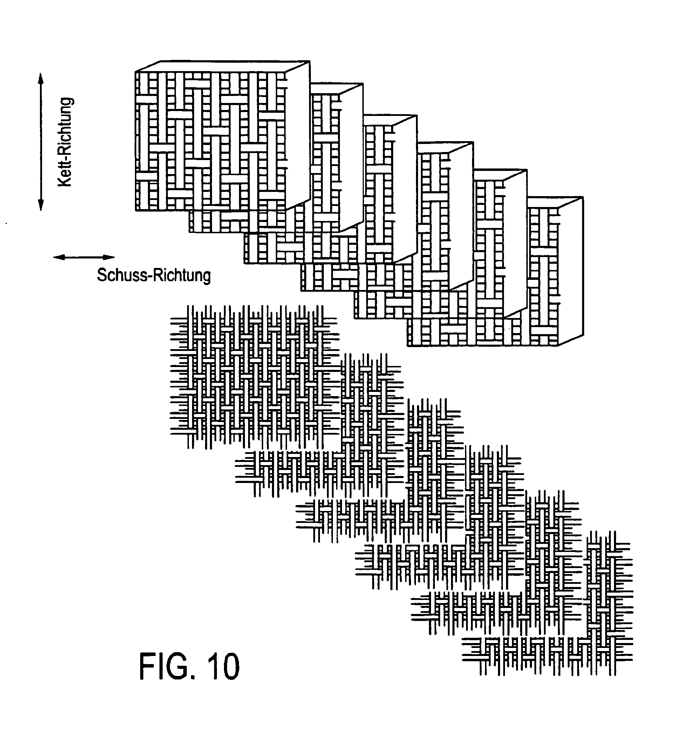

Ein weiterer bevorzugter Lagenaufbau eines kohlensstofffaserverstärkten Kunststoffs weist mehrere Lagen auf, wobei in zumindest einigen Lagen und bevorzugt in allen Lagen ein aus Kohlenstofffasern erzeugtes Gewebe vorhanden ist. Ein Beispiel eines derartigen Lagenaufbaus ist schematisch in Figur 10 dargestellt.

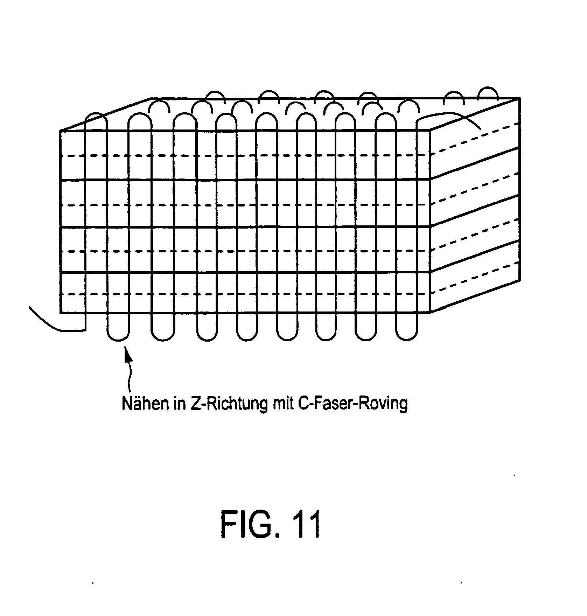

In einer weiteren bevorzugten Ausführungsform werden die einzelnen Lagen aus kohlenstofffaserverstärkten Kunststoff, beispielsweise die in den Figuren 9 und 10 gezeigten Lagen, wie in Figur 11 beispielhaft gezeigt, in einer Richtung senkrecht zu den Ebenen, in denen die Lagenaufbauten angeordnet sind, (z-Richtung) mit Kohlenstofffasern vernäht, insbesondere durch C-Faser-Roving.

Die Lagenaufbauten können allein oder auch zusammen mit einem weiteren induktionswärmeerzeugenden Mittel, wie beispielweise einem metallischen Mittel, insbesondere mit einen nichtgewebten metallischen Netz, verwendet werden.

Obwohl in einer oben beschriebenen Ausführungsform ein nichtgewebtes metallisches Netz als induktionswärmeerzeugendes Mittel verwendet worden ist, kann in anderen Ausführungsformen neben dem nichtgewebten metallischen Netz und/oder den als induktionswärmeerzeugendes Mittel fungierenden Kohlenstofffasern auch ein gewebtes metallisches Netz als Induktionswärme erzeugendes Mittel verwendet werden, das insbesondere durch Verweben von Metallfäden erzeugt wird.

Wenn Kohlenstofffasern als induktionswärmeerzeugendes Mittel verwendet werden, haben diese Kohlenstofffasern bevorzugt zumindest zwei Funktionen. Zum einen beeinflussen sie die physikalischen Eigenschaften des jeweiligen Materials und zum anderen dienen sie als induktionswärmeerzeugende Mittel.

## Patentansprüche

1. Verfahren zum Verbinden eines ersten Materials mit einem zweiten Material mittels eines durch Wärme aktivierbaren Klebematerials (8) im Flugzeugbau, wobei das Klebematerial (8) zwischen dem ersten Material und dem zweiten Material angeordnet und eine Induktionswärme erzeugt wird, die zur Aktivierung des Klebematerials (8) ausreichend ist, wobei das erste Material und/oder das zweite Material und/oder das Klebematerial (8) ein induktionswärmeerzeugendes Mittel aufweisen, wobei das induktionswärmeerzeugende Mittel eine Menge von Kohlenstofffasern ist oder aufweist und wobei die Induktionswärme durch mittelfrequente Strahlung erzeugt wird.

2. Verfahren nach Anspruch 1, **dadurch gekennzeichnet, dass** das erste Material und/oder das zweite Material ein kohlenstofffaserverstärkter Kunststoff in einem Lagenaufbau ist oder einen kohlenstofffaserverstärkten Kunststoff in einem Lagenaufbau aufweist, wobei der Lagenaufbau mehrere Lagen mit den Kohlenstofffasern aufweist und die Kohlenstofffasern des kohlenstofffaserverstärkten Kunststoffs das induktionswärmeerzeugende Mittel sind.

3. Verfahren nach Anspruch 2, **dadurch gekennzeichnet, dass** die Kohlenstofffasern in zumindest einigen Lagen unidirektional ausgerichtet sind, wobei die Kohlenstofffasern von mindestens zwei benachbarten Lagen nicht parallel angeordnet sind, so dass die Kohlenstofffasern der mindestens zwei benachbarten Lagen Kreuzungspunkte aufweisen.

4. Verfahren nach einem der Ansprüche 2 und 3, **dadurch gekennzeichnet, dass** die Kohlenstofffasern in zumindest einer Lage ein Gewebe bilden

5. Verfahren nach einem der Ansprüche 2 bis 4, **dadurch gekennzeichnet, dass** die Lagen mittels Kohlenstofffasern vernäht sind.

6. Verfahren nach Anspruch 5, **dadurch gekennzeichnet, dass** die Lagen in einer Richtung senkrecht zu den Ebenen, in denen die Lagen angeordnet sind, mittels Kohlenstofffasern vernäht sind.

7. Verfahren nach einem der Ansprüche 2 bis 6, **dadurch gekennzeichnet, dass** die Ausrichtung der Kohlenstofffasern in den Lagen bezüglich einer Symmetrieebene, die parallel zu den Lagen und bezogen auf eine Richtung senkrecht zu den Lagen mittig im Lagenaufbau angeordnet ist, symmetrisch ist.

8. Verfahren nach einem der Ansprüche 1 bis 7, **dadurch gekennzeichnet, dass** neben den Kohlenstofffasern des kohlenstofffaserverstärkten Kunststoffs kein weiteres induktionswärmeerzeugendes Mittel zur Erzeugung der Induktionswärme verwendet wird.

9. Verfahren nach einem der Ansprüche 1 bis 8, **dadurch gekennzeichnet, dass** das erste Material und/oder das zweite Material zumindest ein Material aus einer Gruppe bestehend aus Kunststoffen, insbesondere thermoplastischen Materialien, Faserverbundkunststoffen, insbesondere kohlenstofffaserverstärkten Kunststoffen und glasfaserverstärkten Kunststoffen, Metallen und Faser-Metall-Laminaten aufweisen.

10. Verfahren nach einem der Ansprüche 1 bis 9, **dadurch gekennzeichnet, dass**
a) das erste Material Bestandteil eines Befestigungselements (33) ist oder das Befestigungselement (33) aus dem ersten Material besteht und
b) das zweite Material Bestandteil eines Flugzeugbauteils (32) ist oder das Flugzeugbauteil (32) aus dem zweiten Material besteht,
so dass das erste Material des Befestigungselements (33) mit dem zweiten Material des Flugzeugbauteils (32) verbunden wird, um das Befestigungselement (33) mit dem Flugzeugbauteil (32) zu verbinden.

## Claims

1. Method of connecting a first material to a second material by means of a heat-activatable adhesive material (8) in aircraft construction, wherein the adhesive material (8) is arranged between the first material and the second material and an induction heat is generated which is sufficient to activate the adhesive material (8), wherein the first material and/or the second material and/or the adhesive material (8) has/have a means for generating induction heat, wherein the means for generating induction heat is or comprises an amount of carbon fibres and wherein the induction heat is generated by means of medium frequency radiation.

2. Method according to claim 1, **characterized in that** the first material and/or the second material is/are a carbon fibre-reinforced plastic in a layer structure or has/have a carbon fibre-reinforced plastic in a layer structure, wherein the layer structure has multiple layers with the carbon fibres and the carbon fibres of the carbon fibre-reinforced plastic are the means for generating induction heat.

3. Method according to claim 2, **characterized in that** the carbon fibres are oriented unidirectionally in at least some layers, wherein the carbon fibres of at least two adjacent layers are not arranged parallel to each other, such that the carbon fibres of the at least two adjacent layers have intersection points.

4. Method according to any of claims 2 and 3, **characterized in that** the carbon fibres in at least one layer form a woven fabric.

5. Method according to any of claims 2 to 4, **characterized in that** the layers are sewn by means of carbon fibres.

6. Method according to claim 5, **characterized in that** the layers are sewn by means of carbon fibres in a direction perpendicular to the planes in which the layers are arranged.

7. Method according to any of claims 2 to 6, **characterized in that** the orientation of the carbon fibres in the layers is symmetric with respect to a plane of symmetry which is arranged parallel to the layers and centrally in the layer structure with respect to a direction perpendicular to the layers.

8. Method according to any of claims 1 to 7, **characterized in that**, apart from the carbon fibres of the carbon fibre-reinforced plastic, no further means for generating induction heat is used for generating the induction heat.

9. Method according to any of claims 1 to 8, **characterized in that** the first material and/or the second material comprises/comprise at least one material from a group consisting of plastics, in particular thermoplastic materials, fibre composite plastics, in particular carbon fibre-reinforced plastics and glass fibre-reinforced plastics, metals and fibre metal laminates.

10. Method according to any of claims 1 to 9, **characterized in that**
a) the first material is a constituent of an attachment element (33) or the attachment element (33) consists of the first material and
b) the second material is a constituent of an aircraft component (32) or the aircraft component (32) consists of the second material,
such that the first material of the attachment element (33) is connected to the second material of the aircraft component (32) in order to connect the attachment element (33) to the aircraft component (32).

## Revendications

1. Procédé permettant d'assembler dans la construction aéronautique un premier matériau à un deuxième matériau au moyen d'un matériau adhésif (8) thermoactivable, ledit matériau adhésif (8) étant disposé entre le premier matériau et le deuxième matériau et une chaleur à induction étant générée, laquelle est suffisante pour activer le matériau adhésif (8), le premier matériau et/ou le deuxième matériau et/ou le matériau adhésif (8) comportant un moyen générateur de chaleur à induction, ledit moyen générateur de chaleur à induction étant constitué de ou comportant une quantité de fibres de carbone et la chaleur à induction étant générée par un rayonnement de fréquence moyenne.

2. Procédé selon la revendication 1, **caractérisé en ce que** le premier matériau et/ou le deuxième matériau est une matière plastique renforcée par des fibres de carbone dans une structure en couches ou comporte une matière plastique renforcée par des fibres de carbone dans une structure en couches, ladite structure en couches comportant plusieurs couches avec des fibres de carbone et lesdites fibres de carbone de la matière plastique renforcée par des fibres de carbone sont le moyen générateur de chaleur à induction.

3. Procédé selon la revendication 2, **caractérisé en ce que** les fibres de carbone dans au moins quelques couches ont une orientation unidirectionnelle, les fibres de carbone d'au moins deux couches adjacentes n'étant pas disposées parallèlement, de telle sorte que les fibres de carbone desdites au moins deux couches adjacentes présentent des points d'intersection.

4. Procédé selon les revendications 2 et 3, **caractérisé en ce que** les fibres de carbone forment un tissu dans au moins une couche.

5. Procédé selon l'une quelconque des revendications 2 à 4, **caractérisé en ce que** les couches sont cousues entre elles au moyen des fibres de carbone.

6. Procédé selon la revendication 5, **caractérisé en ce que** les couches sont cousues entre elles au moyen des fibres de carbone, dans une direction perpendiculaire aux plans dans lesquels sont disposées les couches.

7. Procédé selon l'une quelconque des revendications 2 à 6, **caractérisé en ce que** l'orientation des fibres de carbone dans les couches est symétrique par rapport à un plan de symétrie qui est disposé parallèlement aux couches et par rapport à une direction perpendiculaire aux couches au milieu de la structure en couches.

8. Procédé selon l'une quelconque des revendications 1 à 7, **caractérisé en ce que**, outre les fibres de carbone de la matière plastique renforcée par des fibres de carbone, on n'utilise pas d'autre moyen générateur de chaleur à induction pour générer la chaleur à induction.

9. Procédé selon l'une quelconque des revendications 1 à 8, **caractérisé en ce que** le premier matériau et/ou le deuxième matériau comportent au moins un matériau choisi dans un groupe constitué de matières plastiques, en particulier de matières thermoplastiques, de matières plastiques composites renforcées par des fibres, en particulier des matières plastiques renforcées par de fibres de carbone et de matières plastiques renforcées par des fibres de verre, de métaux et de stratifiés fibres/métal.

10. Procédé selon l'une quelconque des revendications 1 à 9, **caractérisé en ce que**
a) le premier matériau est une partie intégrante d'un élément de fixation (33) ou l'élément de fixation (33) est réalisé à partir du premier matériau, et
b) le deuxième matériau est une partie intégrante d'une pièce de construction aéronautique (32) ou la pièce de construction aéronautique (32) est réalisée à partir du deuxième matériau,
de telle sorte que le premier matériau de l'élément de fixation (33) est assemblé au deuxième matériau de la pièce de construction aéronautique (32), afin d'assembler l'élément de fixation (33) avec la pièce de construction aéronautique (32).
